# EUROPEAN PATENT APPLICATION

(11) **EP 2 204 418 A1**
(43) Date of publication of application: **07.07.2010**
(21) Application number: 08832599.8
(22) Date of filing: 03.09.2008
(51) Int. Cl.: C08L 69/00, C08L 67/00

(54) **THERMOPLASTIC RESIN COMPOSITION AND MOLDED BODY OBTAINED FROM THE SAME**

(30) Priority: 21.09.2007 JP 2007245758
(71) Applicant: Idemitsu Kosan Co., Ltd., Chiyoda-ku Tokyo 100-8321 (JP)
(72) Inventor: HAYATA, Yusuke, Ichihara-shi Chiba 299-0193 (JP); ISHIKAWA, Yasuhiro, Ichihara-shi Chiba 299-0193 (JP)
(74) Representative: Gille Hrabal Struck Neidlein Prop Roos
(86) International application number: PCT/JP2008/065864
(87) International publication number: WO 2009/037974

(57) **Abstract**

Disclosed is a thermoplastic resin composition **characterized by** containing a combination of 95 to 5 % by mass of a polycarbonate copolymer having a specific repeating unit in a specific amount and having a viscosity index of 30 to 71 (component A) and 5 to 95 % by mass of a polyester resin (component B). Also disclosed is a molded body obtained from such a thermoplastic resin composition, which is improved in fluidity, chemical resistance, impact resistance and flame retardancy.

## Description

### [TECHNICAL FIELD]

The present invention relates to a thermoplastic resin composition and a molded body obtained from the same. More specifically, the present invention relates to a thermoplastic resin composition containing a polycarbonate copolymer having a specific repeating structure unit and a polyester resin and utilizable in an optical component field, an OA apparatus field, an information/telecommunication device field, an electric/electronic apparatus field and an automobile field, and a molded body obtained from the same.

### [BACKGROND ART]

Since polycarbonate is excellent in heat resistance and impact resistance, it is widely utilized in an automobile and electric/electronic field. Among them, in the automobile and electric/electronic field, blending polycarbonate with ABS resin or AS resin is becoming a main stream in order to improve fluidity of polycarbonate as the product is becoming thinner for reducing the weight. Furthermore, blending polycarbonate with ABS resin not only improves fluidity but also allows improvement of impact resistance and chemical resistance. On the other hand, making an alloy of polycarbonate and polyester enables improvement of chemical resistance.
In recent years, environment-conscious plastic products are being developed with increased ratio of the plant-derived material in the product by blending the plant-derived components. Plant-derived plastics are mainly based on aliphatic polyester and a copolymer of aliphatic polyester and other polyester and it is possible to improve chemical resistance by adding them to polycarbonate. Among the aliphatic polyester, a resin composition containing polylactic acid blended in it is being developed from a standpoint of heat resistance and durability.

In addition, a technique to improve fluidity and hydrolysis resistance by making an alloy of polycarbonate with polylactic acid and adding a stabilizer has been disclosed (for example, refer to Patent Document 1). Through this technique, it is possible to improve moldability of the alloy material by exploiting the excellent fluidity of polylactic acid and stabilizing polylactic acid. However, although it is possible to improve fluidity by increasing the blending ratio of polylactic acid, increasing the blending ratio of polycarbonate may cause a problem that fluidity and moldability may deteriorate. In addition, there is concern that crosslinking of polylactic acid, extension of the polymer chain, etc. may occur due to stabilization of polylactic acid, resulting in deterioration of fluidity.
On the other hand, a technique to improve the tensile properties of polylactic acid and impart toughness by alloying the aliphatic polycarbonate and polylactic acid has been disclosed (for example, refer to Patent Documents 2 and 3). In this technique, it is possible to improve the mechanical properties without deteriorating transparency by alloying especially polypropylene carbonate as the aliphatic polycarbonate with polylactic acid. However, there is concern that the practical utility is not satisfactory due to decrease in heat resistance when aliphatic polycarbonate is used.

[Patent Document 1] Japanese Unexamined Patent Publication No. 2007-56246
[Patent Document 2] Japanese Unexamined Patent Publication No. 2007-131756
[Patent Document 3] Japanese Unexamined Patent Publication No. 2007-131757

### [DISCLOSURE OF THE INVENTION]

### [Problems to be Solved by the Invention]

The present invention has been attained with the view of the above-mentioned circumstances and aims at providing a thermoplastic resin composition with improved fluidity, chemical resistance, impact resistance and flame retardancy and a molded body obtained from the same.

### [Means for Solving the Problems]

As a result of a keen examination to achieve the above-mentioned purpose, the present inventors have found that the above-mentioned problems could be solved by using a polycarbonate copolymer having a specific repeating structure unit and a polyester resin in a predetermined ratio and eventually completed the present invention. According to the present invention, there are provided:
1. a thermoplastic resin composition comprising a combination of 95 to 5 mass% of a polycarbonate copolymer having a repeating unit represented by the following general formula (I) and (II), the content of the repeating unit represented by the following general formula (II) being 1 to 30 mass%, and having a viscosity index of 30 to 71 [component (A)] and 5 to 95 mass% of a polyester resin [component (B)],

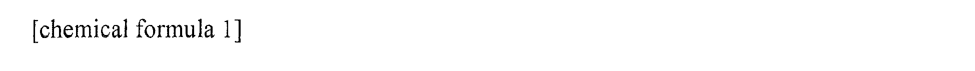

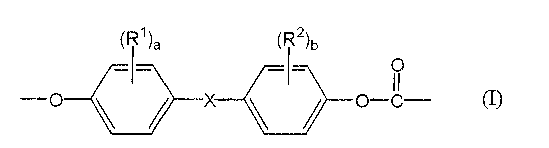

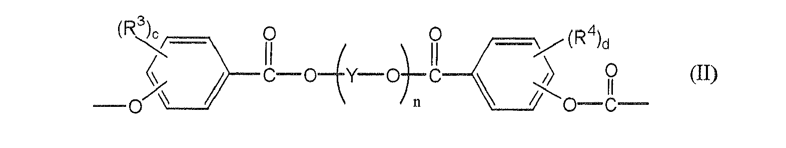

[wherein R¹ and R² each independently indicate an alkyl group of C1 to C6. X indicates a single bond, an alkylene group of C1 to C8, an alkylidene group of C2 to C8, a cycloalkylene group of C5 to C15, a cycloalkylidene group of C5 to C15, -S-, -SO-, -SO₂-, -O- and -CO- bonds or a group represented by the following formula (III-1) or the following formula (III-2).

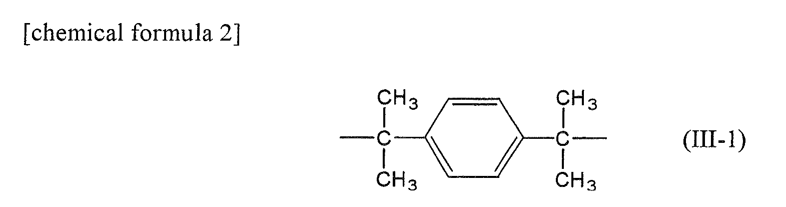

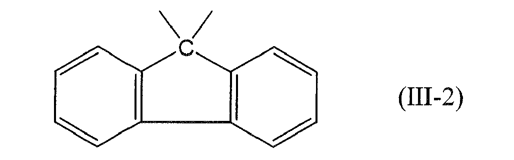

R³ and R⁴ each independently indicate an alkyl group of C1 to C3 and Y indicates a linear or branched chain alkylene group of C2 to C15. Letters a through d are each an integer of 0 to 4 and n is an integer of 2 to 450. In addition, a plurality of R¹ and R² may be the same or different from each other and a plurality of R³ and R⁴ may be the same or different from each other.]
2. the thermoplastic resin composition described in the above item 1, wherein the component (B) is at least one selected from polylactic acid, a copolymer of lactic acids and
   other hydroxycarboxylic acids, polybutylene terephthalate, polyethylene terephthalate, polybutylene adipate-terephthalate copolymer, and polybutylene succinate,
3. the thermoplastic resin composition described in the above item 1, further containing 50 parts by mass or less of a rubbery elastomer [component (C)] relative to the total of 100 parts by mass of the component (A) and the component (B),
4. the thermoplastic resin composition described in the above item 1, further containing 100 parts by mass or less of a flame retardant which does not contain any of chlorine atom and bromine atom [component (D)] relative to the total of 100 parts by mass of the component (A) and the component (B),
5. the thermoplastic resin composition described in the above item 3, further containing 100 parts by mass or less of a flame retardant which does not contain any of chlorine atom and bromine atom [component (D)] relative to the total of 100 parts by mass of the component (A) and the component (B),
6. a molded body formed of the thermoplastic resin composition described in any of the above items 1 to 5,
7. the molded body described in the above item 6, utilized as a housing for an OA apparatus, an information and telecommunication apparatus, or an electric and electronic apparatus, and
8. the molded body described in the above item 6, utilized as an automotive internal component or an automotive external component.

### [Advantage of the Invention]

According to the present invention, a thermoplastic resin composition containing a polycarbonate copolymer and a polyester resin excellent in chemical resistance, impact resistance and flame retardancy and having high fluidity can be obtained.

### [BRIEF DESCRIPTION OF THE DRAWINGS]

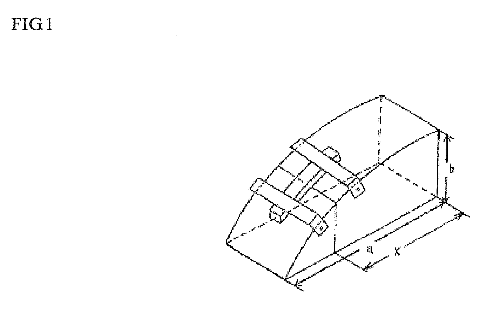

Fig. 1 is a perspective view of a sample piece attachment jig for evaluating the chemical resistance of the resin composition according to the present invention.

### [Reference Numerals]

a: base length of a one-quarter ellipse jig
b: height of a one-quarter ellipse jig
X: distance to the crack formation site

### [BEST MODE FOR CARRYING OUT THE INVENTION]

### [Polycarbonate Copolymer [component (A)]]

The thermoplastic resin composition according to the present invention is a composition containing a polycarbonate copolymer [component (A)] having a specific repeating structure unit.

The component (A) in the present invention is a phenol-modified diol copolymerized polycarbonate and can be produced by a common producing method called an interfacial polymerization method. That is, it can be produced by reacting carbonate precursors such as a divalent phenol, a phenol-modified diol and phosgene. Specifically, it is produced, for example, by a reaction of the polycarbonate precursors such as a divalent phenol, a phenol-modified diol and phosgene in an inert solvent such as methylene chloride and in the presence of a known acid receptor and a molecular weight regulator, and further adding a catalyst and a branching agent as needed.

The component (A) can be obtained by copolymerization of a divalent phenol and a phenol-modified diol, which will be described later, via an interfacial polymerization method and has a repeating unit represented by the following general formula (I) and (II).

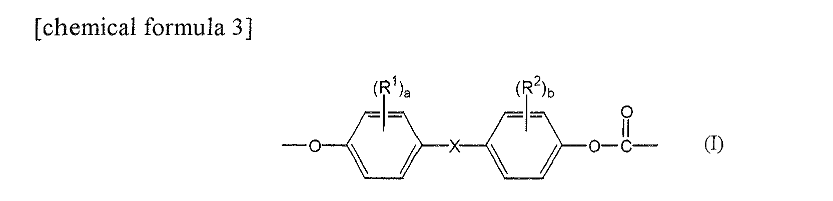

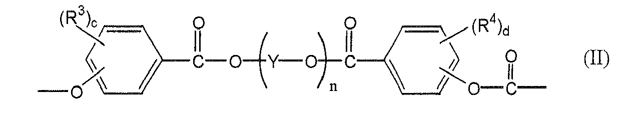

(wherein R¹ to R⁴, X, Y, letters a through d and n will be described later.)
As the divalent phenol, compounds represented by the following general formula (Ia) are exemplified.

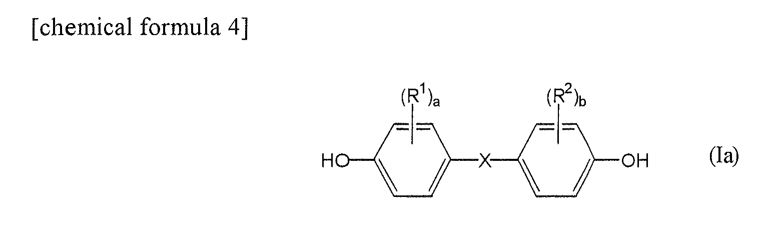

In the general formula (Ia), R¹ and R² each independently indicate an alkyl group of C1 to C6 and the alkyl group may be any of linear, branched chain and cyclic. As the alkyl group, methyl, ethyl, n-propyl, isopropyl, n-butyl, isobutyl, tert-butyl, n-pentyl, isopentyl, n-hexyl, isohexyl, cyclopentyl, cyclohexyl groups and the like may be specifically exemplified. Letters a and b each indicate the substitution number of R¹ and R² and an integer of 0 to 4. In addition, if there are a plurality of R¹, they may be the same or different from each other and, if there are a plurality of R², they may be the same or different from each other.

X indicates a single bond, an alkylene group of C1 to C8 (for example, methylene, ethylene, propylene, butylene, pentylilene, hexylene, etc.), an alkylidene group of C2 to C8 (for example, ethylidene, isopropylidene, etc.), a cycloalkylene group of C5 to C15 (for example, cyclopentylene, cyclohexylene, etc.), a cycloalkylidene group of C5 to C15 (for example, cyclopentylidene, cyclohexylidene, etc.), -S-, -SO-, -SO₂- -O-, and -CO- bonds or a bond represented by the following formula (III-1) or the following formula (III-2).

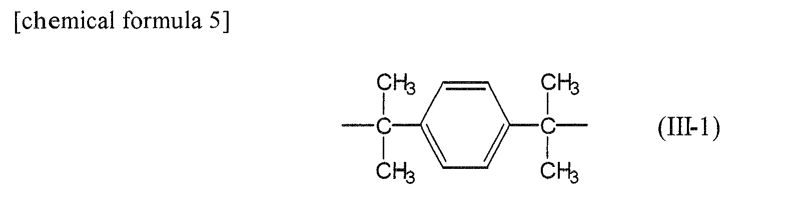

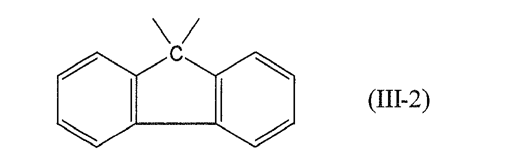

As the divalent phenol represented by the above-mentioned general formula (Ia), among others, especially 2,2-bis(4-hydroxyphenyl)propane (popular name: bisphenol A) is preferable. As the bisphenols other than bisphenol A, for example, bis(hydroxyaryl)alkanes such as bis(4-hydroxyphenyl)methane, 1,1-bis(4-hydroxyphenyl)ethane, 2,2-bis(4-hydroxyphenyl)butane, 2,2-bis(4-hydroxyphenyl)octane, 2,2-bis(4-hydroxyphenyl)phenylmethane, 2,2-bis(4-hydroxy-1-methylphenyl)propane, bis(4-hydroxyphenyl)naphthylmethane, 1,1-bis(4-hydroxy-t-butylphenyl)propane, 2,2-bis(4-hydroxy-3-bromophenyl)propane, 2,2-bis(4-hydroxy3,5-dimethylphenyl)propane, 2,2-bis(4-hydroxy-3-chlorophenyl)propane, 2,2-bis(4-hydroxy-3,5-dichlorophenyl)propane, 2,2-bis(4-hydroxy-3,5-dibromophenyl)propane and the like; bis(hydroxyaryl)cycloalkanes such as 1,1-bis(4-hydroxyphenyl)cyclopentane, 1,1-bis(4-hydroxyphenyl)cyclohexane, 1,1-bis(4-hydroxyphenyl)-3,5,5-trimethylcyclohexane and the like; dihydroxyarylethers such as 4,4'-dihydroxyphenylether, 4,4'-dihydroxy-3,3'-dimethylphenylether and the like; dihydroxydiaryl sulfides such as 4,4'-dihydroxydiphenyl sulfide, 4,4'-dihydroxy-3,3'-dimethyldiphenyl sulfide and the like; dihydroxydiaryl sulfoxides such as 4,4'-dihydroxydiphenyl sulfoxide, 4,4'-dihydroxy-3,3'-dimethyldiphenyl sulfoxide and the like; dihydroxydiaryl sulfones such as 4,4'-dihydroxydiphenyl sulfone, 4,4'-dihydroxy-3,3'-dimethyldiphenyl sulfone and the like; dihydroxydiphenyls such as 4,4'-dihyroxydiphenyl and the like; dihydroxydiarylfluorenes such as 9,9-bis(4-hydroxyphenyl)fluorene, 9,9-bis(4-hydroxy-3-methylphenyl)fluorene and the like; dihydroxydiaryladamantanes such as 1,3-bis(4-hydroxyphenyl)adamantane, 2,2-bis(4-hydroxyphenyl)adamantane, 1,3-bis(4-hydroxyphenyl)-5,7-dimethyladamantane and the like; bis(4-hydroxyphenyl)diphenylmethane, 4,4'-[1,3-phenylenebis(1-methylethylidene)]bisphenol, 10,10-bis(4-hydroxyphenyl)-9-anthrone, and 1,5-bis(4-hydroxyphenylthio)-2,3-dioxapentaene, and the like are exemplified. These divalent phenols may be used each alone or in a mixture of two or more kinds.

As the molecular weight regulator, various compounds may be used, as long as they are usually used for polymerization of polycarbonate resin. Specifically, as a monovalent phenol, for example, phenol, o-n-butylphenol, m-n-butylphenol, p-n-butylphenol, o-isobutylphenol, m-isobutylphenol, p-isobutylphenol, o-t-butylphenol, m-t-butylphenol, p-t-butylphenol, o-n-pentylphenol, m-n-pentylphenol, p-n-pentylphenol, o-n-hexylphenol, m-n-hexylphenol, p-n-hexylphenol, p-t-octylphenol, o-cyclohexylphenol, m-cyclohexylphenol, p-cyclohexylphenol, o-phenylphenol, m-phenylphenol, p-phenylphenol, o-n-nonylphenol, m-nonylphenol, p-n-nonylphenol, o-cumylphenol, m-cumylphenol, p-cumylphenol, o-naphthylphenol, m-naphthylphenol, p-naphthylphenol, 2,5-di-t-butylphenol, 2,4-di-t-butylphenol, 3,5-di-t-butylphenol, 2,5-dicumylphenol, 3,5-dicumylphenol, p-cresol, bromophenol, tribromophenol, monoalkylphenols having a linear or branched chain alkyl group of average number of 12 to 35 carbon atoms at ortho-, meta- or para-position, 9-(4-hydroxyphenyl)-9-(4-methoxyphenyl)fluorene, 9-(4-hydroxy-3-methylphenyl)-9-(4-methoxy-3-methylphenyl)fluorene, 4-(1-adamantyl)phenol, and the like are exemplified. Among these monovalent phenols, p-t-butylphenol, p-cumylphenol, and p-phenylphenol are preferably used.

As the catalyst, a phase-transfer catalyst, for example, such as a tertiary amine or a salt thereof, a quaternary ammonium salt, a quaternary phosphonium salt and the like may be preferably used. As the tertiary amine, for example, triethyl amine, tributylamine, N,N-dimethylcyclohexyl amine, pyridine, dimethylaniline, and the like are exemplified. In addition, as the salt of the tertiary amine, for example, a hydrochloric acid salt, a bromic acid salt, etc. of these tertiary amines are exemplified. As the tertiary ammonium salt, for example, trimethylbenzylammonium chloride, triethylbenzylammonium chloride, tributylbenzylammonium chloride, trioctylmethylammonium chloride, tetrabutylammonium chloride, tetrabutylammonium bromide, and the like are exemplified. As the quaternary phosphonium salt, for example, tetrabutylphosphonium chloride, tetrabutylphosphonium bromide, and the like are exemplified. These catalysts may be used each alone or in combination of two or more kinds. Among the above-mentioned catalysts, a tertiary amine, especially triethylamine, is preferable.

As the inert organic solvent, there are various solvents. For example, a chlorinated hydrocarbon such as dichloromethane (methylene chloride), trichloromethane, carbon tetrachloride, 1,1-dichloroethane, 1,2-dichloroethane, 1,1,1-trichloroethane, 1,1,2-trichloroethane, 1,1,1,2-tetrachloroethane, 1,1,2,2-tetrachloroethane, pentachloroethane, and chlorobenzene, toluene and acetophenone, and the like are exemplified. These organic solvents may be used each alone or in combination of two or more kinds. Among these, especially methylene chloride is preferable.

As the branching agent, for example, a compound having three or more functional groups such as 1,1,1-tris(4-hydroxyphenyl)ethane,α,α',α"-tris(4-hydroxyphenyl)-1,3,5-triisopropylbenzene, 1-[α-methyl-α-(4'-hydroxyphenyl)ethyl]-4-[α',α'-bis(4"-hydroxyphenyl)ethyl]benzene, and 4,4'-[1-[4-[1-(4-hydroxyphenyl)-1-methylethyl]phenyl]ethylidene]bisphenol; phloroglucin, trimellitic acid, and isatinbis(o-cresol), and the like may also be used.
The phenol-modified diol used for producing the polycarbonate copolymer (A) is a compound represented by the following general formula (IIa).

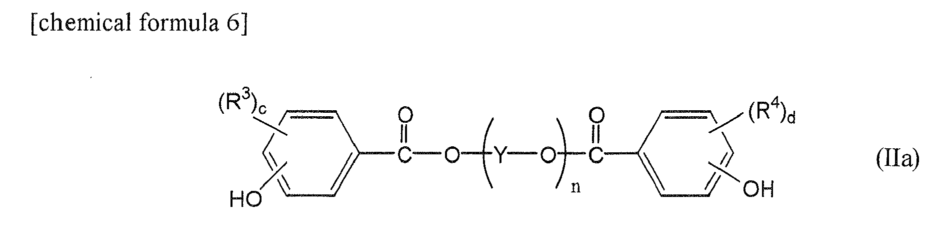

In the general formula (IIa), R³ and R⁴ each independently indicate an alkyl group of C1 to C3 and, as the alkyl group, methyl, ethyl, n-propyl and isopropyl groups are exemplified. If there are a plurality of R³, they may be the same or different from each other and, if there are a plurality of R⁴, they may be the same or different from each other. Y indicates a linear or branched chain alkylene group of C2 to C15 and, as the alkylene group, alkylene groups such as ethylene, propylene, butylene, isobutylene, pentylene, isopentylene groups and the like, and alkylidene groups such as ethylidene, propylidene, isopropylidene, butylidene, isobutylidene, pentylidene, isopentylidene groups and the like are exemplified. Letters c and d are integers of 0 to 4 and n is an integer of 2 to 450. Letter n is preferably an integer of 2 to 200, more preferably 6 to 70.

The phenol-modified diol represented by the above-mentioned general formula (IIa) is, for example, a compound derived from hydroxybenzoic acid or its alkyl ester, acid chloride and polyetherdiol. The phenol-modified diol can be synthesized by the method proposed in Japanese Unexamined Patent Publication No. S62-79222, No. S60-79072, No. 2002-173465, etc. It is desirable to purify the phenol-modified diol obtained by these methods as needed. As the purification method, for example, a method to distil away excess raw material (for example, parahydroxybenzoic acid) by reducing the pressure in the system in the latter stage of the reaction, a method to wash the phenol-modified diol with water or aqueous alkaline solution (for example, aqueous sodium hydrogen carbonate solution), and the like are preferable.

As the hydroxybenzoic acid alkyl ester, hydroxybenzoic acid methyl ester, hydroxybenzoic acid ethyl ester, and the like are the representative examples. Polyetherdiol is represented by HO-(Y-O)ₙ-H and has a repeating unit composed of a linear or branched chain oxyalkylene group of C2 to C15. Specifically, polyethyleneglycol, polypropyleneglycol, polytetramethyleneglycol, and the like are exemplified. Polytetramethyleneglycol is especially preferable from a viewpoint of availability and hydrophobicity. The repeating number, n, of the oxyalkylene group of polyetherdiol is 2 to 450, preferably 2 to 200. If n is 2 or more, the efficiency of copolymerization of phenol-modified diol is high. If n is 450 or less, decrease in the heat resistance of the polycarbonate copolymer (A) is advantageously small.

As the acid chloride, one that is obtained from hydroxybenzoic acid and phosgene is a representative example. More specifically, it can be obtained by a method described in Japanese Patent No. 2652707, etc. Although any of para-, meta-, ortho-isomers of hydroxybenzoic acid or its alkyl ester may be used, para-isomer is preferable from the aspect of the copolymerization reaction. Ortho-isomer may be inferior in reactivity of copolymerization due to the steric hindrance against hydroxyl group.

In the production process of the component (A), it is preferable to use phenol-modified diol as a methylene chloride solution wherever possible in order to prevent its deterioration and the like. When it is not possible to use as the methylene chloride solution, it can be used as an aqueous solution of alkali such as sodium hydroxide.
In the component (A), increasing the copolymerization amount of phenol-modified diol improves fluidity but decreases heat resistance. Therefore, it is preferable to choose the copolymerization amount of phenol-modified diol based on the balance of desired fluidity and heat resistance. Too much copolymerization amount of phenol-modified diol may make the copolymer elastomeric, as shown in Japanese Unexamined Patent Publication No. S62-79222, and the application to the similar usage as that of the common polycarbonate resin may not be possible. In order to keep heat resistance at 100°C or higher, the amount of phenol-modified diol residue contained in the component (A) is 1 to 30 mass%, preferably 1 to 20 mass%, more preferably 1 to 15 mass%.

In the present invention, the viscosity index of the component (A) is 30 to 71 (corresponding to Mv (viscosity-average molecular weight) = 10,000 to 28,100), preferably 37 to 62 (corresponding to Mv = 13,100 to 24,100). If the viscosity index is in the range of 30 to 71, the mechanical properties are satisfactory and the copolymerization effect of phenol-modified diol (comonomer) is exhibited properly. In addition, although a large amount of comonomer is required to achieve high fluidity, heat resistance does not significantly decrease relative to the amount of the comonomer used if the viscosity index is 71 or less. Note that the viscosity index is a value measured based on ISO 1628-4 (1999).

### [Polyester Resin [component (B)]]

The thermoplastic resin composition of the present invention is a composition containing a polyester resin [component (B)] and, as the polyester resin, any of aliphatic polyester resin and aromatic polyester resin may be used.
As the aliphatic polyester resin, from a viewpoint of reducing the environmental load, it is preferable to use at least one selected from polylactic acid, a copolymer of lactic acids and other hydroxycarboxylic acids, polybutyleneterephthalate, polyethyleneterephthalate, polybutyleneadipate-terephthalate copolymer, and polybutylenesuccinate.

Polylactic acid is synthesized from a cyclic dimer of lactic acid, usually called lactide, via ring-opening polymerization and its production method is disclosed in US Patent No. 1,995,970, No. 2,362,511, No. 2,683,136, etc.
In addition, the copolymer of lactic acid and other hydroxycarboxylic acid is usually synthesized from lactide and a cyclic ester intermediate of hydroxycarboxylic acid via ring opening polymerization and its production method is disclosed in US Patent No. 3,635,956, No. 3,797,499, etc.
When the lactic acid-based resin is to be produced by direct dehydration polycondensation not relying on ring-opening polymerization, the lactic acid-based resin with the polymerization degree suitable for the present invention is obtained by polymerization in which lactic acids and other hydroxycarboxylic acid as needed are condensed under azeotropic dehydration preferably in the presence of an organic solvent, especially a phenylether solvent, especially preferably removing water from the solvent distilled by azeotropy and returning the resultant substantially anhydrous solvent to the reaction system.

As the lactic acid, which is the raw material, any of L- and D-lactic acid, or the mixture thereof, and lactide, which is a dimer of lactic acid, may be used.
In addition, as other hydroxycarboxylic acid which may be used in combination with lactic acid, glycolic acid, 3-hydroxybutyric acid, 4-hydroxybutyric acid, 4-hydroxyvaleric acid, 5-hydroxyvaleric acid, 6-hydroxycaproic acid, and the like are exemplified. In addition, a cyclic ester intermediate of hydroxycarboxylic acid, for example, glycolide, which is a dimer of glycolic acid, and ε-caprolactone, which is a cyclic ester of 6-hydroxycaproic acid, may be used.
When the lactic acid-based resin is produced, a suitable molecular weight regulator, branching agent, other modifiers, and the like may be added.
In addition, any of lactic acids and hydroxycarboxylic acids as the copolymer component may be used alone or in combination of two or more kinds and the resultant lactic acid-based resin may be used in a mixture of two or more kinds.

The aliphatic polyester as the component (B) used in the present invention has preferably high molecular weight from a viewpoint of the thermal properties and mechanical properties, and the weight average molecular weight of not less than 30,000 is preferable. In addition, as the aliphatic polyester, polylactic acid is preferable from a viewpoint of durability, stiffness and biodegradability.

The aromatic polyester resin as the component (B) used in the present invention is a polymer or copolymer which is obtained by condensation reaction of aromatic dicarboxylic acid or its reactive derivative and diol or its ester derivative as the main components.
As the above-mentioned aromatic dicarboxylic acid, an aromatic dicarboxylic acid such as terephthalic acid, isophthalic acid, orthophthalic acid, 1,5-naphthalene dicarboxylic acid, 2,6-naphthalene dicarboxylic acid, 4,4'-biphenyldicarboxylic acid, 4,4'-biphenylether dicarboxylic acid, 4,4'-biphenylmethane dicaroboxylic acid, 4,4'-biphenylsulfone dicarboxylic acid, 4,4'-biphenylisopropylidene dicarboxylic acid, 1,2-bis(phenoxy)ethane-4,4'-dicarboxylic acid, 2,5-anthracene dicarboxylic acid, 2,6-anthracene dicarboxylic acid, 4,4'-p-terphenylene dicarboxylic acid, 2,5-pyridine dicarboxylic acid and the like is preferably used. Among these, especially terephthalic acid and 2,6-naphthalene dicarboxylic acid are preferable.
The aromatic dicarboxylic acid may be used in a mixture of two or more kinds. In addition, one or more aliphatic dicarboxylic acid such as adipic acid, azelaic acid, sebacic acid and dodecanedioic acid and alicyclic dicarboxylic acid such as cyclohexane dicaroboxylic acid and the like may be used in a mixture with the aromatic dicaboxylic acid, as long as their amount is small.

In addition, as the above-mentioned diol, an aliphatic diol such as ethylene glycol, propylene glycol, butylene glycol, hexylene glycol, neopentyl glycol, pentamethylene glycol, hexamethylene glycol, decamethylene glycol, 2-methyl-1,3-propane diol, diethylene glycol, triethylene glycol and the like, an alicyclic diol such as 1,4-cyclohexane dimethanol and the like, an aromatic ring-containing diol such as 2,2-bis(β-hydroxyethoxyphenyl)propane and the like, and the mixture thereof are exemplified. In addition, one or more long chain diol with a molecular weight of 400 to 6,000, that is, polyethylene glycol, poly-1,3-propylene glycol, polytetramethylene glycol and the like may be copolymerized, as long as their amount is small.
In addition, the aromatic polyester resin as the component (B) may be branched by introducing a small amount of a branching agent. Although the type of the branching agent is not limited, trimesic acid, trimellitic acid, trimethylolethane, trimethylolpropane, and pentaerythritol are exemplified.

As the specific aromatic polyester resin, polyethyleneterephthalate (PET), polypropyleneterephthalate, polybutyleneterephthalate (PBT), polyhexyleneterephthalate, polyethylenenaphthalate (PEN), polybutylenenaphthalate (PBN), polyethylene-1,2-bis(phenoxy)ethane-4,4'-dicarboxylate, and the like, as well as a copolymerized polyester such as polyethyleneisophthalate-terephthalate, polybutyleneterephthalate-isophthalate and the like are exemplified.
Among these, polyethyleneterephthalate, polybutyleneterephthalate, polyethylenenaphthalate, polybutylenenaphthalate and the mixture thereof, which are well balanced in the mechanical properties and the like, may be preferably used. Especially a mixture of polyethyleneterephthalate and polybutyleneterephthalate is preferably used because the impact strength, fatigue strength and chemical resistance are quite well balanced in this mixture. The utilization ratio (mass ratio) of polyethyleneterephthalate to polybutyleneterephthalate is preferably in a range of polyethyleneterephthalate:polybutyleneterephthalate being 40:60 to 95:5, especially preferably in a range of 50:50 to 90:10.

In addition, the terminal group structure of the resultant aromatic polyester resin is not specifically limited and the proportion of the hydroxyl group and carboxyl group at the terminal group may be approximately the same or one may be greater than the other. In addition, these terminal groups may be sealed by, for example, a reaction with a compound reactive to such a terminal group.

Such an aromatic polyester resin may be produced according to a common method, wherein a dicarboxylic acid component and the above-mentioned diol component are polymerized with heating in the presence of a polycondensation catalyst containing titanium, germanium, antimony, or the like and removing water or lower alcohol as a by-product out of the system. For example, as the germanium-based polymerization catalyst, an oxide, hydroxide, halide, alcoholate, phenolate, and the like of germanium are exemplified. More specifically, germanium oxide, germanium hydroxide, germanium tetrachloride, tetramethoxygermanium, and the like are exemplified.
In addition, a compound of manganese, zinc, calcium, magnesium and the like which are used in an ester exchange reaction which is a preceding step of the conventionally known polycondensation may be used in combination. These catalysts may be deactivated by a compound of phosphoric acid, phosphorous acid, or the like after termination of the ester exchange reaction, followed by polycondensation.

Although the molecular weight of the aromatic polyester resin is not particularly limited, the intrinsic viscosity measured in o-chlorophenol as a solvent at 25°C is 0.4 to 1.2 dl/g, preferably 0.65 to 1.15 dl/g.
As the component (B) in the present invention, one or more selected from the above-mentioned aliphatic polyester resin and aromatic polyester resin may be used, among which the aliphatic polyester resin is preferable and especially polylactic acid, a copolymer of lactic acids and other hydroxycarboxylic acids, polybutyleneterephthalate, polyethyleneterephthalate, polybutyleneadipate-terephthalate copolymer, and polybutylenesuccinate are preferable.

The blending ratio of the component (A) and the component (B) in the thermoplastic resin composition in the present invention is 95 to 5 mass%, preferably 80 to 40 mass%, more preferably 60 to 50 mass% of the component (A) and 5 to 95 mass%, preferably 20 to 60 mass%, more preferably 40 to 50 mass% of the component (B) based on the total amount of the component (A) and the component (B) from a viewpoint of the fluidity, chemical resistance and impact resistance of the resin.
If the blending ratio of the component (B) is less than 5 mass%, chemical resistance and fluidity is not sufficient. If it is more than 95 mass%, heat resistance and impact resistance decrease.

### [Rubbery Elastomer [component (C)]]

The thermoplastic resin composition of the present invention may be blended with a rubbery elastomer [component (C)].
In the present invention, the component (C) is blended to improve the impact resistance. A core/shell type grafted rubbery elastomer is preferably used from a viewpoint of improvement of the impact resistance and dispersibility of the aliphatic polyester, especially polylactic acid.
In addition, as the grafted rubbery elastomer, one having an acrylic structure highly compatible with polylactic acid in the shell is preferable in order to selectively disperse it in the domain of the aliphatic polyester, especially polylactic acid.
The average particle diameter of the rubbery elastomer is usually 100 to 500 nm, preferably 200 to 400 nm. If the average particle diameter of the rubbery elastomer is in the above-mentioned range, dispersibility is excellent and an improvement effect of the impact resistance is large.

The core/shell type grafted rubbery elastomer has a bilayer structure constructed from a core and a shell. In the present invention, the core/shell type grafted rubbery elastomer which is itself powdery (particle state) and has a core portion of soft rubbery state and a surface shell portion of hard resin state is preferably used.
The core/shell type grafted rubbery elastomer can maintain most of its particle state in the original form even after melt blending it with the mixture of the polycarbonate copolymer [component (A)] and the polyester resin [component (B)]. Furthermore, the elastomer uniformly disperses at the interface between the component (A) and polylactic acid used as the component (B) or in the domain of polylactic acid and stabilizes the shape of the polylactic acid domain, thus preventing the appearance defection such as generation of pearly luster and jetting.

As the core/shell type grafted rubbery elastomer, for example, one obtained by polymerization of one or more vinyl monomers such as styrene in the presence of one or more grafted rubbery polymer obtained from monomers mainly composed of alkyl acrylate, alkyl methacrylate, dimethylsiloxane, and the like is preferably used.
As these alkyl acrylates and alkyl methacrylates, one having an alkyl group of C1 to C10, for example, methyl acrylate, ethyl acrylate, butyl acrylate, 2-ethylhexyl acrylate, n-octyl acrylate, methyl methacrylate, ethyl methacrylate, butyl methacrylate, 2-ethylhexyl methacrylate, n-octyl methacrylate and the like are preferable, among which methyl acrylate, ethyl acrylate, methyl methacrylate, and ethyl methacrylate are especially preferable.

As the grafted rubbery polymer obtained by using these monomers that are mainly composed of alkyl acrylates, a copolymer obtained by the reaction of 70 wt% or more of alkyl acrylate and 30 wt% or less of a vinyl monomer that is copolymerizable with this, for example, methyl methacrylate, acrylonitrile, vinyl acetate, styrene, and the like is preferably used.
Furthermore, the copolymer crosslinked by a multifunctional compound such as divinylbenzene, ethylene dimethacrylate, triallylcyanurate, triallyl isocyanurate and the like may also be used.
In addition, as the grafted rubbery elastomer, one obtained by copolymerization of an aromatic vinyl compound such as styrene, α-methylstyrene and the like, an acrylate ester such as methyl acrylate, ethyl acrylate and the like, a methacrylate ester such as methyl methacryalte and ethyl methacrylate, and the like in the presence of the above-mentioned grafted rubbery polymer may be used.
Furthermore, one obtained by copolymerization of other vinyl monomers, for example, a vinyl cyanide compound such as acrylonitrile, methacrylonitrile and the like, a vinyl ester compound such as vinyl acetate, vinyl propionate, and the like with the above-mentioned monomers may also be used.
As such a grafted rubbery elastomer, one obtained by various methods such as bulk polymerization, suspension polymerization, emulsion polymerization, etc. may be used, among which one obtained by emulsion polymerization is especially preferably used.

Furthermore, as the core/shell type grafted rubbery elastomer, an MAS resin elastomer obtained by graft copolymerization of 20 to 40 mass% of styrene and methyl methacrylate onto 60 to 80 mass% of a polymer of n-butyl acrylate may be used.
In addition, a complex rubber grafted copolymer obtained by graft copolymerizing at least one vinyl monomer onto complex rubber of an average particle diameter of about 0.01 to 1 µm having an inseparable, mutually intertwining structure of 5 to 95 mass% of polysiloxane rubber component and 5 to 95 mass% of poly(meth)acrylate rubber component may also be used.
Examples of the commercially available core/shell type grafted rubbery elastomer having these various forms are Paraloid EXL2603 (produced by Rohm and Haas Co.); Metablen W450A, Metablen W529, Metablen S2001, Metablen C223, and Metablen S2200 (produced by Mitsubishi Rayon Co., Ltd.), and the like.
In addition, in the present invention, a rubbery elastomer such as polyamide-polyether block copolymer is not preferable because its shape factor on the impact resistance is large due to the absence of core/shell structure.

The blending quantity of the rubbery elastomer as the component (C) is preferably 50 parts by mass or less, more preferably 1 to 50 parts by mass, further more preferably 1 to 20 parts by mass, and much further more preferably 1 to 5 parts by mass, relative to the total of 100 parts by mass of the component (A) and the component (B). If the blending quantity is 50 parts by mass or less, the impact resistance can be improved without affecting the improvement effect of fluidity by polylactic acid.

### [Flame Retardant component (D)]

The thermoplastic resin composition of the present invention may be blended with a flame retardant [component (D)] which does not contain any of chlorine atom and bromine atom.
Many of the flame retardants which contain a chlorine atom or a bromine atom have a problem of toxicity. As the flame retardant, the component (D) used in the present invention, organic alkali metal salts, organic alkali earth metal salts, phosphoric acid esters and the like, which do not contain any of chlorine atom and bromine atom, are exemplified.
Among various organic alkali metal salts and alkali earth metal salts, the alkali metal salts and alkali earth metal salts of organic acids or organic acid esters having at least one carbon atom are used. The organic acids or organic acid esters are organic sulfonic acids, organic carboxylic acid, and the like.
On the other hand, the alkali metals are sodium, potassium, lithium, cesium, and the like and the alkali earth metals are magnesium, calcium, strontium, barium, and the like. Among these, the salts of sodium, potassium and cesium are preferably used.

Among the above-mentioned organic alkali metal salts and alkali earth metal salts, for example, in the case of organic sulfonic acid, alkali metal salts or alkali earth metal salts of perfluoroalkanesulfonic acid represented by the following general formula are preferably used.

(CₚF₂ₚ₊₁SO₃)_{q}M

(In the formula, p indicates an integer of 1 to 10. M indicates an alkali metal such as lithium, sodium, potassium, cesium, and the like or an alkali earth metal such as magnesium, calcium, strontium, barium, and the like. Letter q indicates the valency of M.)

In the above-mentioned general formula, as the perfluoroalkanesulfonic acid, for example, perfluoromethanesulfonic acid, perfluoroethanesulfonic acid, perfluoropropanesulfonic acid, perfluorobutanesulfonic acid, perfluoropentanesulfonic acid, perfluorohexanesulfonic acid, perfluoroheptanesulfonic acid, perfluorooctanesulfonic acid and the like may be exemplified. Especially their potassium salts are preferably used.
Other alkali metal salts or alkali earth metal salts of organic sulfonic acids such as diphenylsulfone-3-sulfonic acid, diphenylsulfone-3,3'-disulfonic acid, naphthalenetrisulfonic acid, polystyrenesulfonic acid, and the like may be exemplified.
In addition, as the organic carboxylic acid, for example, perfluoroformic acid, perfluoromethanecarboxylic acid, perfluoroethanecarboxylic acid, perfluoropropanecarboxylic acid, perfluorobutanecarboxylic acid, perfluoropentanecarboxylic acid, perfluorohexanecarboxylic acid, perfluoroheptanecarboxylic acid, perfluorooctanecarboxylic acid, and the like may be exemplified and alkali metal salts or alkali earth metal salts of these organic carboxylic acids are used. The alkali metal and alkali earth metal are the same as the above-mentioned.

The phosphoric acid ester compounds are, for example, a phosphoric acid ester compound represented by the following general formula (IV):

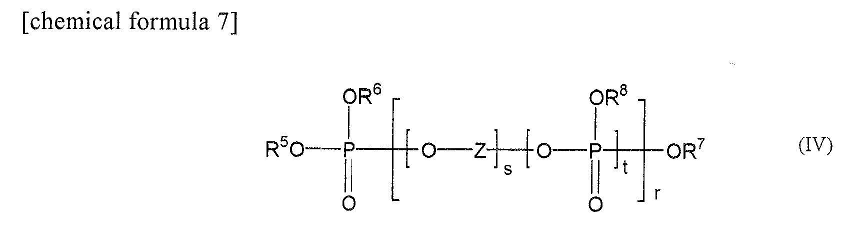

(In the formula, R⁵ to R⁸ each independently indicate a hydrogen atom or an organic group. Z indicates an organic group with a valence of 2 or more. Letter s is 0 or 1, t is an integer of 1 or more, and r indicates an integer of 0 or more).

In addition, the organic group in the above-mentioned general formula (IV) is an alkyl, cycloalkyl, aryl group and the like, which may or may not be substituted. If it is substituted, alkyl, alkoxy, aryl, aryloxy, arylthio groups and the like are exemplified as the substituent.
In addition, other substituents may be an arylalkoxyalkyl group and the like which is a group of the substituents combined with each other or an arylsulfonylaryl group and the like which is combined with each other via an oxygen atom, nitrogen atom, sulfur atom, etc.
In addition, the organic group Z with a valence of 2 or more means a group with a valence of 2 or more formed by eliminating one or more hydrogen atoms bonding to the carbon atom from the above-mentioned organic group.
For example, they are derived from an alkylene group, a (substituted) phenylene group, or bisphenols which are multinuclear phenols. Preferably bisphenol A, hydroquinone, resorcinol, dihydroxydiphenyl, and dihydroxynaphthalene may be exemplified.

The phosphoric acid ester compound may be a monomer, oligomer, polymer or a mixture thereof. Specifically, trimethyl phosphate, triethyl phosphate, tributyl phosphate, trioctyl phosphate, tributoxyethyl phosphate, triphenyl phosphate, tricresyl phosphate, cresyldiphenyl phosphate, octyldiphenyl phosphate, tri(2-ethylhexyl) phosphate, diisopropylphenyl phosphate, trixylenyl phosphate, tris(isopropylphenyl) phosphate, trinaphthyl phosphate, bisphenol A bisphosphate, hydroquinone bisphosphate, resorcin bisphosphate, resorcinol-diphenyl phosphate, trioxybenzene triphosphate, or a substitution product or condensation product thereof may be exemplified. Among these, one mainly composed of the phosphoric acid ester compound having r of 1 or more indicated in the general formula (IV) or one with the phenyl group partly substituted by an alkyl group and the like are sometimes preferable from a standpoint of the heat resistance of the molded article.

Here, as the commercially available phosphoric acid ester compound not containing halogen, for example, TPP [triphenyl phosphate], TXP [trixylenyl phosphate], CR-733S [resorcinol bis(diphenylphosphate)], PX-200 [1,3-phenylene-tetrakis(2,6-dimethylphenyl)phosphoric acid ester, PX-201 [1,4-phenylene-tetrakis(2,6-dimethylphenyl)phosphoric acid ester], PX-202 [4,4'-biphenylene-tetrakis(2,6-dimethylphenyl)phosphoric acid ester], CR-741 [bisphenol A bis(diphenylphosphate)] and the like may be exemplified.

The flame retardant as the component (D) in the present invention may be used alone or in combination of two or more kinds.
The blending quantity of the component (D) is preferably 100 parts by mass or less, more preferably 1 to 100 parts by mass, further more preferably 1 to 50 parts by mass, and much further more preferably 10 to 35 parts by mass, relative to the total of 100 parts by mass of the component (A) and the component (B).

### [Thermoplastic Resin Composition]

The thermoplastic resin composition of the present invention may contain various additives as needed, for example, antioxidant, ultraviolet absorbent, photostabilizer, and the like besides the above-mentioned component (A) through component (D) to the extent that the purpose of the present invention is not impaired.
The thermoplastic resin composition of the present invention may be obtained by blending the predetermined amount of the above-mentioned polycarbonate copolymer as the component (A) and the polyester resin as the component (B), as well as the rubbery elastomer as the component (C), the flame retardant as the component (D) and various additives which are used as needed, and melt kneading them. Blending and melt kneading at this time may be carried out using the commonly used apparatuses, for example, such as a ribbon blender, Henschel mixer (trade name), Bambury mixer, drum tumbler, single axis screw extruder, double axis screw extruder, cokneader, multiple axis screw extruder, and the like. The suitable heating temperature at melt kneading is usually 240 to 280°C.

### [Molded Body Using the Thermoplastic Resin Composition]

The thermoplastic resin composition of the present invention can be formed into a molded body excellent in chemical resistance and heat resistance by applying the commonly known molding method, for example, such as hollow molding, injection molding, extrusion molding, vacuum molding, pressure molding, heat bending molding, compression molding, calendar molding, rotational molding, and the like.
Especially, the thermoplastic resin composition of the present invention can be widely used in the fields of an OA apparatus, an information/telecommunication device, an automotive component, a building component, an electric home appliance, and the like.
The present invention also provides a molded body formed of the above-mentioned thermoplastic resin composition of the present invention. The molded body can be suitably used, for example, for a housing of an OA apparatus, an information/telecommunication device, and an electric/electronic device and the like, as well as an automotive interior material and automotive exterior material.

### [Examples]

The present invention will be further described in more detail by the examples. The present invention is not limited by these examples at all.

### [Method to Measure the Physical Properties and Evaluation of the Thermoplastic Resin Composition]

### (1) Fluidity (Spiral flow length, SFL) (cm)

The spiral flow length (SFL) was measured at a molding temperature of 260°C and a mold temperature of 80°C, with a thickness of 2 mm and a width of 10 mm, and an injection pressure of 125 MPa. Larger number indicates better fluidity.

### (2) Chemical resistance (%)

The chemical resistance was measured according to the chemical resistance evaluation method (limit strain with a quarter ellipse). To a sample piece (3 mm thick) fixed on a surface of a quarter ellipse shown in Fig. 1 (perspective view) was applied gasoline (Zearth, produced by Idemitsu Kosan Co., Ltd.) and the sample was held for 48 hours. The minimum length with which a crack occurred (X) was measured and the limit strain (%) was calculated according to the following mathematical formula [1]. Note that, in the following mathematical formula [1], t is the thickness of the sample piece. Larger limit strain (%) indicates higher chemical resistance.

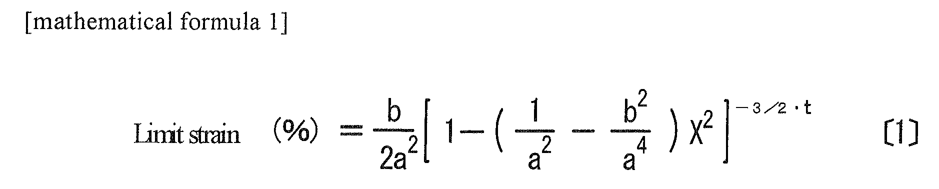

### (3) Izod impact strength (kJ/m²)

The impact strength was measured at a measuring temperature of 23°C using a test piece with a thickness of 3.2 mm (1/8 inches) prepared by an injection molding machine and according to ASTM Standard D-256.

### (4) Flame retardancy

A horizontal flame test or a vertical flame test was performed using a test piece with a thickness of 1.5 mm (1/16 inches) prepared according to UL Standard 94. Based on the test result, the samples were evaluated according to the flammability classification of UL-94 (horizontal flame test: HB, vertical flame test: V-0, V-1, and V-2 in the order of flame retardancy). The sample which did not fall under these flammability classification was classified as off-specification.

### [Examples No. 1 to 17 and Comparative Examples 1 to 9]

After drying each of the polycarbonate raw materials shown in Table 1 and Table 2, each of the predetermined amount of the component (A) through the component (D) shown in Table 1 and Table 2 was uniformly blended using a tumbler and supplied to a double axis extrusion molding machine with a vent (diameter: 35 mm) (TEM 35, manufactured by Toshiba Machine Co., Ltd.), and the resultant mix was kneaded at a temperature of 240°C and pelletized.
After drying the resultant pellets at 80°C for 5 hours, they were subjected to injection molding using an injection molding machine at a cylinder temperature of 240°C and a mold temperature of 40°C to obtain the desired test pieces. Using the test pieces, measurements of the above-mentioned (1) through (4) were carried out. Results are shown in Table 1 and Table 2.

In Table 1 and Table 2, the component (A) through the component (D) used were as follows.
Component (A)
   A-1: Polycarbonate copolymer, produced according to Production Example 1 and Example 4 of Japanese Unexamined Patent Publication No. 2005-247947 (PTMG, Mn: 1,000)
(Viscosity index: 39.6)
   A-2: Polycarbonate copolymer, produced according to Production Example 1 and Example 7 of Japanese Unexamined Patent Publication No. 2005-247947 (PTMG, Mn: 2,900)
(Viscosity index: 41.5)
   A-3: Aromatic polycarbonate (FN1500, produced by Idemitsu Kosan Co., Ltd.) (Mv: 14,500)
Component (B)
   B-1: Polylactic acid (Lacea H-100, produced by Mitsui Chemicals, Inc.)
   B-2: Polybutyleneadipate-terephthalate copolymer (Ecoflex, produced by BASF)
   B-3: Polybutyleneterephthalate (Toraycon N1300, produced by Toray Industries, Inc.)
   B-4: Polybutylenesuccinate (GSP1a, AZ81T, produced by Mitsubishi Chemical Corporation)
   B-5: Polyethyleneterephthalate (Dianite PA200, produced by Mitsubishi Rayon Co., Ltd.)
Component (C)
   C-1: Methyl methacrylate-glycidyl methacrylate-butyl acrylate-dimethylsiloxane copolymer (Metablen S2200, produced by Mitsubishi Rayon Co., Ltd.)
   C-2: Methyl methacrylate-butadiene-styrene copolymer (Paraloid EXL2603, produced by Rohm and Haas Co.)
Component (D)
   D-1: Phosphorus-based flame retardant, 1,3-phenylene-tetrakis(2,6-dimethylphenyl) phosphoric acid ester (PX-200, produced by Daihachi Chemical Industry Co., Ltd.)
   D-2: Silicone copolymerized polycarbonate, produced according to Production Example 4 of Japanese Unexamined Patent Publication No. 2002-12755 (Mv: 17,000, polydimethylsiloxane content: 4 mass%)

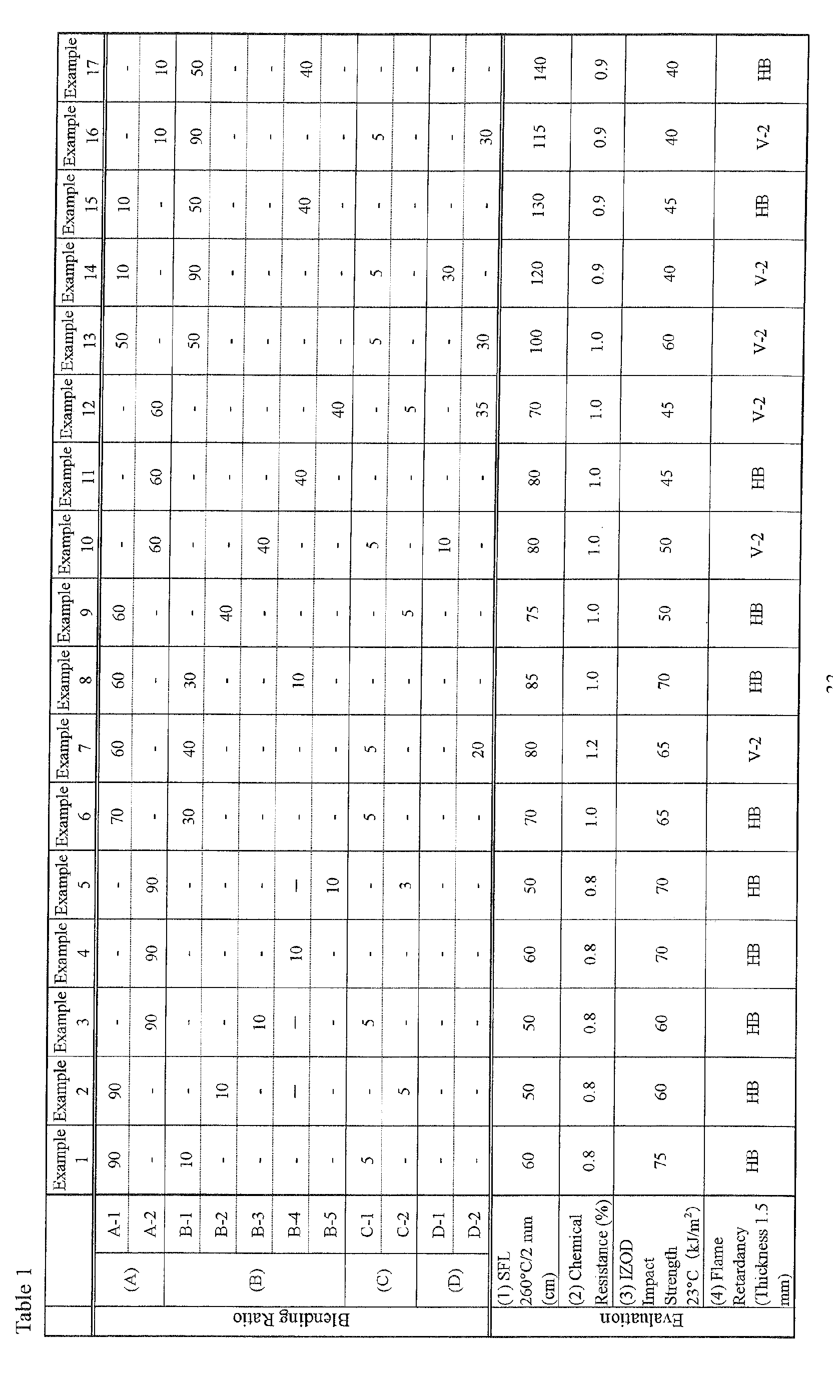

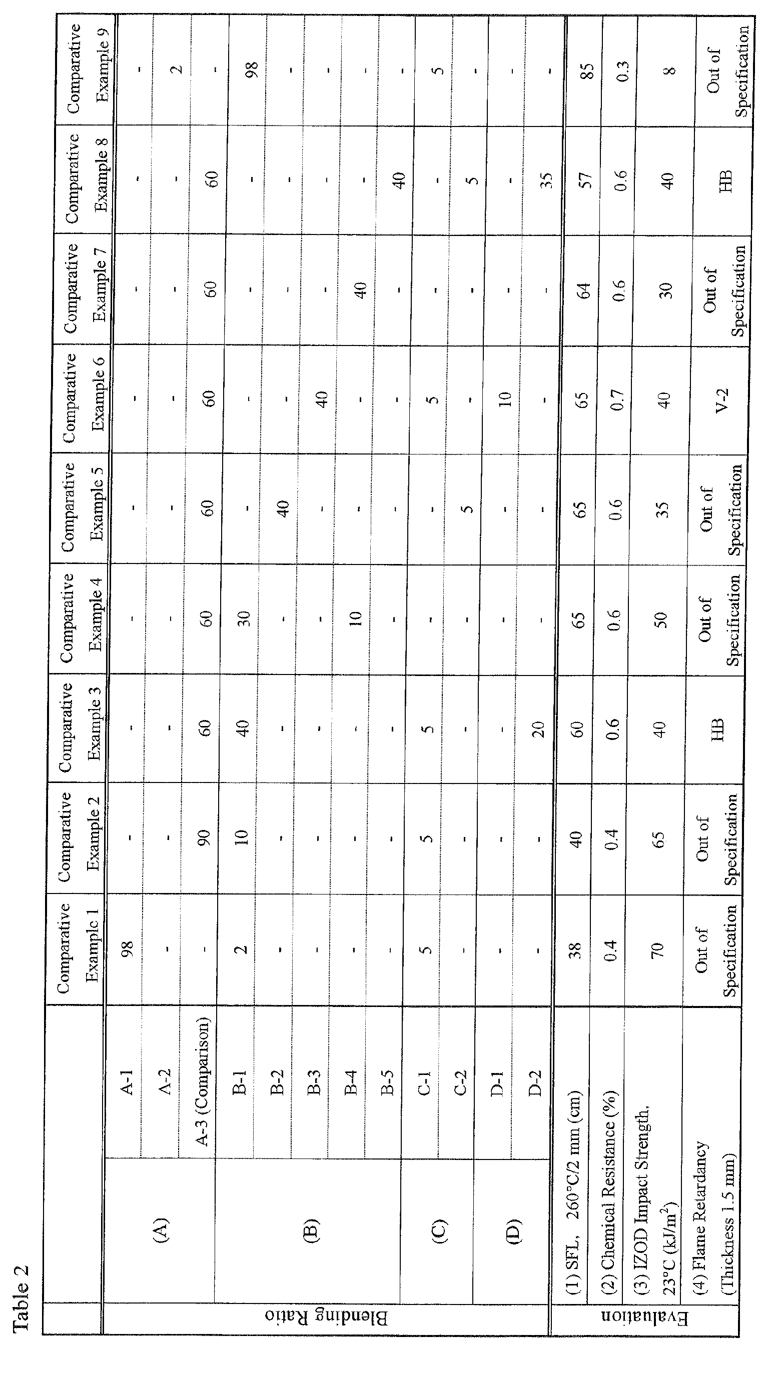

From Table 1 and Table 2, followings were revealed.

### (1) Examples 1 to 17

From Examples 1 to 17, it is appreciated that a thermoplastic resin composition, that is, a highly flowable polycarbonate-polyester resin composition excellent in fluidity and chemical resistance was obtained. Therefore, the thermoplastic resin composition of the present invention has improved moldability compared to the conventional polycarbonate-polyester resin composition and is useful for thin-wall molding.

### (2) Comparative Examples 1 and 9

From Comparative Examples 1 and 9, it is appreciated that, if the blending quantity of the (B) polyester resin is out of the range determined in the present invention, the chemical resistance and flame retardancy deteriorate.

### (3) Comparative Examples 2 to 8

From Comparative Examples 2 to 8, it is appreciated that, if the polycarbonate copolymer (A) prepared by the present invention is not blended, the composition has low fluidity and is not suitable for thin-wall molding, and the chemical resistance and flame retardancy deteriorate since the dispersibility of the (B) polyester resin lowers.

### [Industrial Applicability]

The thermoplastic resin composition of the present invention is improved in fluidity, chemical resistance, impact resistance and flame retardancy. Furthermore, use of polylactic acid and the like as the polyester resin and use of a flame retardant which does not contain a chlorine atom or a bromine atom enable to attain the thermoplastic resin composition with the reduced environmental load. In addition, the excellent fluidity of the thermoplastic resin composition of the present invention allows the thin-wall molding and it can be widely used for an OA apparatus, an information/telecommunication device, an automotive component, a building component, an electric/electronic device field such as an electric home appliance, and the like. In addition, it can be suitably used for production of a housing of an OA apparatus, an information/telecommunication device, an electric/electronic device, and the like.

## Claims

1. A thermoplastic resin composition comprising a combination of 95 to 5 mass% of a polycarbonate copolymer having a repeating unit represented by the following general formula (I) and (II), the content of the repeating unit represented by the following general formula (II) being 1 to 30 mass%, and having a viscosity index of 30 to 71 [component (A)] and 5 to 95 mass% of a polyester resin [component (B)]: 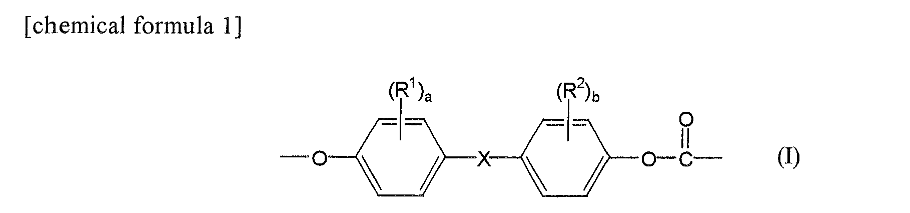 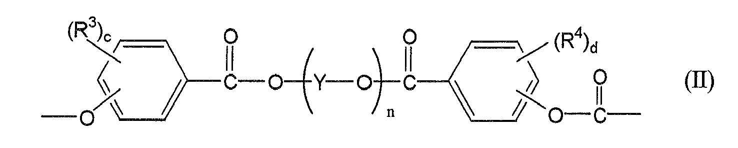 [wherein R¹ and R² each independently indicate an alkyl group of C1 to C6; X indicates a single bond, an alkylene group of C1 to C8, an alkylidene group of C2 to C8, a cycloalkylene group of C5 to C15, a cycloalkylidene group of C5 to C15, -S-, -SO-, -SO₂-, -O- and -CO- bonds or a group represented by the following formula (III-1) or the following formula (III-2): 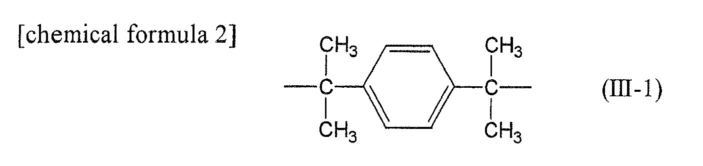 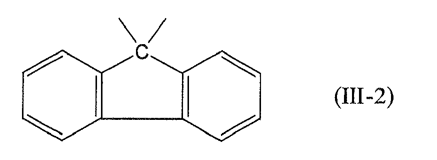 wherein R³ and R⁴ each independently indicate an alkyl group of C1 to C3 and Y indicates a linear or branched chain alkylene group of C2 to C15; letters a through d are each an
integer of 0 to 4 and n is an integer of 2 to 450; in addition, a plurality of R¹ and R² may be the same or different from each other and a plurality of R³ and R⁴ may be the same or different from each other].

2. The thermoplastic resin composition as set forth in claim 1,
wherein the component (B) is at least one selected from polylactic acid, a copolymer of lactic acids and other hydroxycarboxylic acids, polybutylene terephthalate, polyethylene terephthalate, polybutylene adipate-terephthalate copolymer, and polybutylene succinate.

3. The thermoplastic resin composition as set forth in claim 1, further comprising 50 parts by mass or less of a rubbery elastomer [component (C)] relative to the total of 100 parts by mass of the component (A) and the component (B).

4. The thermoplastic resin composition as set forth in claim 1, further comprising 100 parts by mass or less of a flame retardant which does not contain any of chlorine atom and bromine atom [component (D)] relative to the total of 100 parts by mass of the component (A) and the component (B).

5. The thermoplastic resin composition as set forth in claim 3, further comprising 100 parts by mass or less of a flame retardant which does not contain any of chlorine atom and bromine atom [component (D)] relative to the total of 100 parts by mass of the component (A) and the component (B).

6. A molded body formed of the thermoplastic resin composition as set forth in any of claims 1 to 5.

7. The molded body as set forth in claim 6, utilized as a housing for an OA apparatus, an information and telecommunication apparatus, or an electric and electronic apparatus.

8. The molded body as set forth in claim 6, utilized as an automotive internal component or an automotive external component.
